# EUROPEAN PATENT APPLICATION

(11) **EP 2 261 837 A2**
(43) Date of publication of application: **15.12.2010**
(21) Application number: 10165408.5
(22) Date of filing: 09.06.2010
(51) Int. Cl.: G06K 7/10, G06K 7/14

(54) **Imaging terminal having data compression**

(30) Priority: 11.06.2009 US 482979
(71) Applicant: Hand Held Products, Inc., Skaneateles Falls, New York 13153 (US)
(72) Inventor: Deng, Shulan, San Jose, CA 95133 (US); Wang, Ynjiun P., Cupertino, CA 95014 (US)
(74) Representative: Buckley, Guy Julian

(57) **Abstract**

There is described in one embodiment an indicia reading terminal having an image sensor pixel array incorporated therein, wherein the terminal is operative for decoding of decodable indicia and for providing color frames of image data for storage or transmission. An imaging terminal in one embodiment can include an image sensor having a hybrid monochrome and color image sensor pixel array including a first subset of monochrome pixels and a second subset of color pixels. Embodiments of data compression circuits and/or methods for processing image data from the hybrid image sensor pixel array are provided.

## Description

### CROSS REFERENCE TO RELATED APPLICATIONS

This application claims priority to U. S. Patent Application No. 12/482,979 filed June 11, 2009 entitled, "Imaging Terminal Having Data Compression." The priority of the above application is claimed and is incorporated herein by reference in its entirety.

### FIELD OF THE INVENTION

The application relates to data terminals in general and more specifically to data compression for imaging data terminals.

### BACKGROUND OF THE INVENTION

Image sensor based terminals are known to be used in industrial data collection applications. Image sensor based indicia reading terminals have been used for a number of years for purposes of decoding information encoded in bar code symbols. For decoding of a bar code symbol, images captured with use of an image sensor based terminal are subject to processing by application of one or more bar code decoding algorithms. Recently, by using color image sensors in the Automatic Identification and Data Capture (AIDC) industry, high quality color images/videos can be captured and stored to meet the growing needs of scanner customers.

### SUMMARY OF THE INVENTION

There is described in one embodiment an indicia reading terminal having an image sensor pixel array incorporated therein, wherein the terminal is operative for decoding of decodable indicia and for providing color frames of image data for storage, display, or transmission. An imaging terminal in one embodiment can include an image sensor having a hybrid monochrome and color image sensor pixel array that includes a first subset of monochrome pixels and a second subset of color pixels. The terminal can be operative to capture a frame of image data including monochrome image data representative of light incident on the monochrome pixels and color image data representative of light incident on the color pixels. The terminal can be operative to activate a processing module that can compress data from the hybrid monochrome and color image sensor pixel array.

### BRIEF DESCRIPTION OF THE DRAWINGS

The features described herein can be better understood with reference to the drawings described below. The drawings are not necessarily to scale, emphasis instead generally being placed upon illustrating the principles of the invention. In the drawings, like numerals are used to indicate like parts throughout the various views.

Fig. 1 is a schematic diagram illustrating an imaging terminal in one embodiment;

Fig. 2 is a diagram illustrating an exemplary hybrid monochrome and color image sensor pixel array having a first subset of monochrome pixels and a second subset of color pixels;

Fig. 3 is a block diagram illustrating an imaging terminal in one embodiment;

Fig. 4 is a perspective physical form view of an exemplary imaging terminal including a hand held housing;

Fig. 5 is a block diagram illustrating an exemplary embodiment of an image compression module according to the application;

Fig. 6 is a block diagram illustrating an exemplary embodiment of an image stream compression module according to the application;

Fig. 7 is a block diagram illustrating an exemplary embodiment of an image decompression module according to the application;

Fig. 8 is a block diagram illustrating an exemplary embodiment of an image stream decompression module according to the application;

Fig. 9 is a schematic view of an exemplary system incorporating a plurality of imaging terminals according to the application; and

Fig. 10A is a diagram illustrating an exemplary color image (shown in black and white) and Fig. 10B is a diagram illustrating an exemplary re-constructed color image according to an embodiment of the application (shown in black and white).

### DETAILED DESCRIPTION OF THE EMBODIMENTS

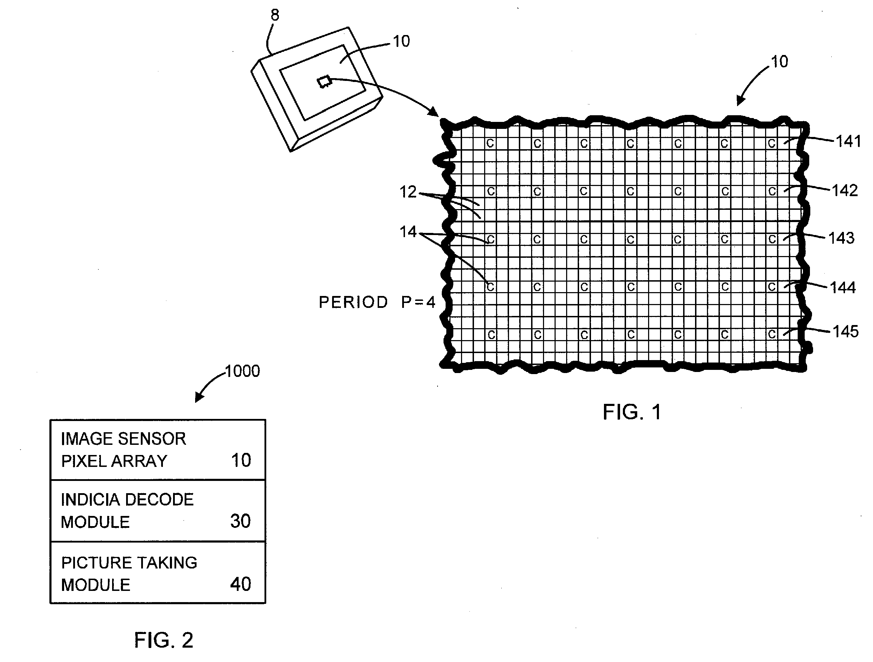

Referring to Fig. 1, an imaging terminal 1000 can be provided having a hybrid monochrome and color image sensor pixel array 10, wherein the image sensor pixel array has a first subset of monochrome pixels and a second subset of color pixels. Terminal 1000 can also include an indicia decode module 30 for configuring terminal 1000 to operate in an indicia decode operating mode and a picture taking module 40 for configuring terminal 1000 to operate in a picture taking mode.

Referring to Fig. 2, a hybrid monochrome and color image sensor pixel array 10 of an imaging terminal 1000 can include pixels arranged in a plurality of rows of pixels and can include a first subset of monochrome pixels 12 devoid of color filter elements and a second subset of color pixels 14 including color filter elements. Such color sensitive pixels can be disposed at spaced apart positions of an image sensor pixel array 10 and can be disposed at positions uniformly or substantially uniformly throughout an image sensor pixel array 10. In one embodiment, the spaced apart color pixels of the image sensor array, though spaced apart can follow a pattern according to a Bayer pattern. For example, where Red=R, Green=G, and Blue =B, the color pixels shown in row 141 can have the pattern ...GRGRGRG... which pattern can be repeated for rows 145 and 143. The pixels of row 142 can have the pattern ...BGBGBGB..., which pattern can be repeated for row 144. The patterns described with reference to rows 141, 142, 143, 144, 145 can be repeated throughout image sensor pixel array 10. Alternatively, different patterns for the color pixels may be used in accordance with principle of the invention. A color frame of image data captured with use of a color image sensor pixel array 10 having both color and monochrome pixels can include monochrome pixel image data and color pixel image data. Image sensor 8 can be packaged in an image sensor integrated circuit as shown in Fig. 2. Various additional features that can be utilized with imaging terminal 1000 are disclosed in U. S. Patent Application No. 11/174,447 entitled, Digital Picture Taking Optical Reader Having Hybrid Monochrome And Color Image Sensor Array, filed June 30, 2005, incorporated herein by reference.

As shown in FIG. 2, the majority of pixels of the image sensor array are monochrome pixels of the first subset. Color sensitive pixels of the second subset are at spaced apart positions and can be uniformly or substantially uniformly distributed throughout the image sensor array. Color sensitive pixels may be distributed in the array in a specific pattern of uniform distribution such as a period of P=4 where, for every fourth row of pixels of the array, every fourth pixel is a color sensitive pixel as shown in FIG. 2. Alternatively, other distributions may be used such as a period of P=2, where every other pixel of every other row of the image sensor array is a color sensitive pixel.

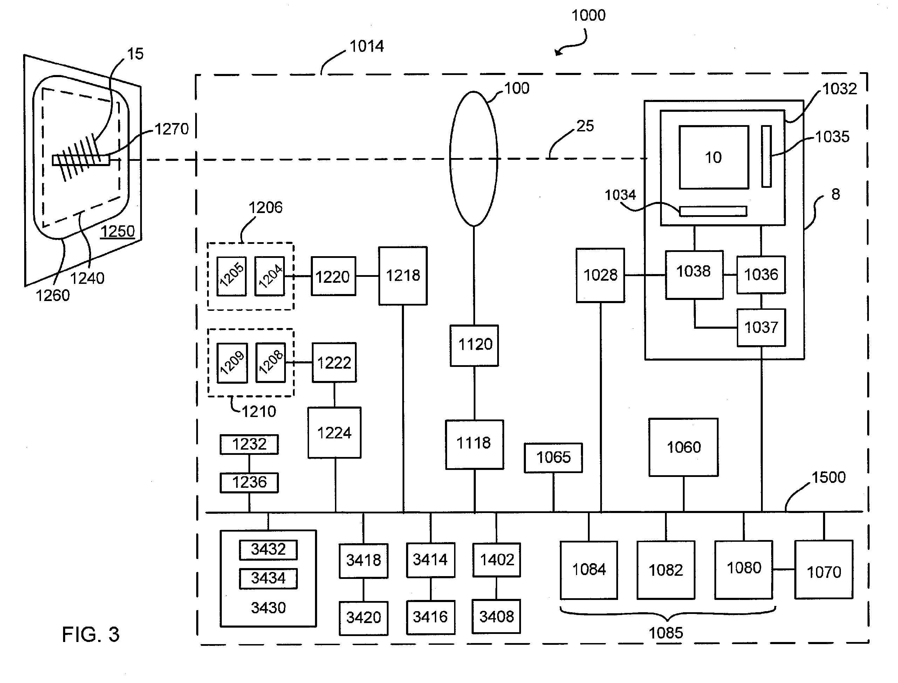

A block diagram illustrating an imaging terminal 1000 in one embodiment is shown in Fig. 3. Imaging terminal 1000 can include image sensor 8 having image sensor circuit 1032 comprising a multiple pixel image sensor pixel array 10 having pixels arranged in rows and columns of pixels, associated column circuitry 1034 and row circuitry 1035. Associated with the image sensor circuit 1032 can be amplifier circuit 1036, and an analog to digital converter 1037 that converts image information in the form of analog signals read out of image sensor circuit pixel array 10 into image information in the form of digital signals. Image sensor circuit 1032 can also have an associated timing and control circuit 1038 for use in controlling *e.g*., the exposure period of image sensor circuit 1032, gain applied to the amplifier circuit 1036. The noted circuit components 1032, 1036, 1037, and 1038 that make up image sensor 8 or a subset of the components 1032, 1036, 1037, 1038 can be packaged into a common image sensor integrated circuit. In one example, image sensor 8 can be provided by monochrome MT9V022 image sensor integrated circuit available from Micron Technology, Inc. modified to include color filters disposed on a subset of pixels of image sensor pixel array 10 to define a hybrid monochrome and color image sensor pixel array as described herein.

In the course of operation of terminal 1000 image signals can be read out of image sensor circuit 1032, amplified by amplifier circuit 1036, converted by analog to digital converter 1037, and stored into a system memory such as RAM 1080. A memory 1085 of terminal 1000 can include RAM 1080, a nonvolatile memory 1082 such as may be provided by EPROM and a storage memory device 1084 such as may be provided by a flash memory or a hard drive memory. In one embodiment, terminal 1000 can include CPU 1060 that can be adapted to read out stored image data (*e.g*., memory 1085) and subject such image data to various image processing algorithms. Terminal 1000 can include a direct memory access unit (DMA) 1070 for routing image information read out from image sensor pixel array 10 that has been subject to conversion to RAM 1080. In another embodiment, terminal 1000 can employ a system bus providing for bus arbitration mechanism (*e.g*., a PCI bus) thus eliminating the need for a central DMA controller. A skilled artisan would appreciate that other embodiments of the system bus architecture and/or direct memory access components providing for efficient data transfer between the image sensor circuit 1032, memory 1085 and/or CPU 1060 are within the scope and the spirit of the application.

Referring to further aspects of terminal 1000, lens assembly 100 can be adapted for use in focusing an image of a decodable indicia 15 located within a field of view 1240 on an object 1250 onto image sensor pixel array 10. Imaging light rays can be transmitted to impinge on array 10, for example, about imaging axis 25. Lens assembly 100 can be adapted to be capable of multiple focal lengths and multiple best focus distances.

Terminal 1000 can also include an illumination pattern light source bank 1204 and associated light shaping optics 1205 for generating an illumination pattern 1260 substantially corresponding to a field of view 1240 of terminal 1000. The combination of bank 1204 and optics 1205 can be regarded as an illumination pattern generator 1206. Terminal 1000 can also include an aiming pattern light source bank 1208 and associated light shaping optics 1209 for generating an aiming pattern 1270 on object 1250. The combination of bank 1208 and optics 1209 can be regarded as an aiming pattern generator 1210. In use, terminal 1000 can be oriented by an operator with respect to a object 1250 bearing decodable indicia 15 in such manner that aiming pattern 1270 is projected on a decodable indicia 15. In the example of Fig. 3, decodable indicia 15 is provided by a 1D bar code symbol. Decodable indicia 15 could also be provided by a 2D bar code symbols or optical character recognition (OCR) characters.

Each of illumination pattern light source bank 1204 and aiming pattern light source bank 1208 can include one or more light sources. Lens assembly 100 can be controlled with use of lens assembly control unit 1120. Illumination pattern light source bank 1204 can be controlled with use of illumination pattern light source control circuit 1220. Aiming pattern light source bank 1208 can be controlled with use of aiming pattern light source bank control circuit 1222. Lens assembly control unit 1120 can output signals for control of lens assembly 100, *e.g*., for changing a focal length and/or a best focus distance of (a plane of optical focus of) lens assembly 100. Illumination pattern light source bank control circuit 1220 outputs signals for control of illumination pattern light source bank 1204, *e.g*., for changing a level of illumination output by illumination pattern light source bank 1204. Aiming pattern light source bank control circuit 1222 can output signals to aiming pattern light source bank 1208, e.g., for changing a level of illumination output by aiming pattern light source bank 1208.

Terminal 1000 can also include a number of peripheral devices including trigger 3408 that may be used to make active a trigger signal for activating frame readout and/or certain decoding processes. Terminal 1000 can be adapted so that actuation of trigger 3408 activates a trigger signal and initiates a read attempt. For example, terminal 1000 can be operative so that in response to activation of a trigger signal, a succession of frames can be captured by way of read out of image information from image sensor pixel array 10 and then storage of the image information after conversion into memory 1085 (*e.g*., memory 1080 that can buffer one or more of the succession of frames at a given time). CPU 1060 can be operative to subject one or more of the succession of frames to a read (*e.g*., decode) attempt. For attempting to read a bar code symbol, CPU 1060 can process image data of a frame corresponding to a line of pixel positions (*e.g*., a column of pixel positions, a row of pixel positions, or a diagonal line of pixel positions) to determine a spatial pattern of dark and light cells and can convert each light and dark cell pattern determined into a character or character string via table lookup, to determine and output a message (*e.g*., display). By being operative to process a frame (*e.g*., of image data) for attempting to decode a decodable indicia, terminal 1000 can be regarded as including indicia decode operating mode. Operating with an indicia decode operating mode active, terminal 1000 can be operative to process a frame of image data for decoding the frame, and can further be operative for outputting a decoded message.

Terminal 1000 can include various interface circuits for coupling various of the peripheral devices to system address/data bus (system bus) 1500 for communication with CPU 1060, also coupled to system bus 1500. Terminal 1000 can include interface circuit 1028 for coupling image sensor timing and control circuit 1038 to system bus 1500, interface circuit 1118 for coupling lens assembly control unit 1120 to system bus 1500, interface circuit 1218 for coupling light source bank control circuit 1220 to system bus 1500, interface circuit 1224 for coupling aiming light source bank control circuit 1222 to system bus 1500, and interface circuit 3406 for coupling trigger 3408 to system bus 1500.

Terminal 1000 can also include a display 3420 coupled to system bus 1500 and in communication with CPU 1060, via interface 3418, as well as pointer mechanism 3416 in communication with CPU 1060 via interface 3414 connected to system bus 1500.

In a further aspect, imaging terminal 1000 includes communication interface 3430 that can include any transceiver like mechanism to enable terminal 1000 to communicate with other spaced apart devices 150 (*e.g*., using wired, wireless or optical connections). Communication interface 3430 includes a radio frequency (RF) communication interface 3432 and I/O communication interface 3434. Radio frequency communication interface 3432 can include one or more radio transceivers such as one or more of 802.11 radio transceiver, Bluetooth radio transceiver, GSM/GPS radio transceiver or WIMAX (802.16) radio transceiver. Radio frequency communication interface 3432 facilitates wireless communication of data between imaging terminal 1000 and a spaced apart device 150. I/O communication interface 3434 includes one or more serial or parallel hard-wired communication interfaces facilitating communication with a spaced apart device 150 such as one or more of Ethernet communication interface, universal serial bus (USB) interface, or RS-232 communication interface.

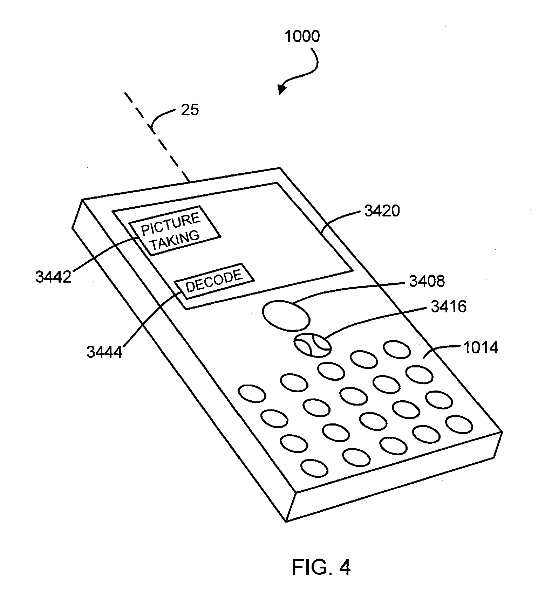

Terminal 1000 as is illustrated in the view of Fig. 4 can include a hand held housing 1014 supporting and encapsulating image sensor 8, lens assembly 100 and the additional components of terminal 1000 designated to be within boundary 1014 of Fig. 3.

In one embodiment, terminal 1000 can have a first operator activated picture taking mode and a second operator activated indicia decode mode. Terminal 1000 can be operative so that image capture and processing can be activated responsively to an operator actuation of trigger 3408 whether a picture taking mode or an indicia decode mode is active. However, terminal 1000 can be operative so that image data processing carried out by terminal 1000 is differentiated depending on which of a first picture taking mode or a second indicia decode mode is active.

A picture taking mode can be activated by selection of displayed button 3442 on display 3420 of terminal 1000. An indicia decode mode can be activated by selection of displayed button 3444 on display 3420 of terminal 1000. Terminal 1000 can be operative so that button 3442 and/or button 3444 can be selected with use of pointer mechanism 3416 of terminal 1000. Terminal 1000 can also be operative so that image capturing and processing can be activated by actuation of trigger 3408 irrespective of whether a picture taking mode or indicia decode mode is active. For example, a default mode can be operative upon actuation of trigger 3408 or sensed conditions can select a mode upon actuation of trigger 3408.

A succession of frames of image data that can be captured and subject to the described processing in terminal 1000 can be full frames (*e.g*., including pixel values corresponding to each pixel over a predetermined area of image sensor pixel array). A succession of frames of image data that can be captured and subject to the described processing (*e.g*., frame quality evaluation processing) can also be "windowed frames" comprising pixel values corresponding to less than each pixel over a predetermined area of image sensor pixel array 10 and in some cases less than about 50%, in some cases less than 25%, and in some cases less than 10% of pixels of image sensor pixel array 10. A succession of frames of image data that can be captured and subject to the described processing can also comprise a combination of full frames and windowed frames. A full frame can be captured by selectively addressing for readout of pixels of image sensor pixel array 10 corresponding to the full frame. A windowed frame can be captured by selectively addressing for readout of pixels of image sensor pixel array 10 corresponding to the windowed frame.

Terminal 1000 can capture frames of image data at a rate known as a frame rate. A typical frame rate is 60 frames per second (FPS) which translates to a frame time (frame period) of 16.6 ms. Another typical frame rate is 30 frames per second (FPS) which translates to a frame time (frame period) of 33.3 ms per frame. Alternatively, other frame rates may be used.

As described herein, an imaging terminal 1000 can be provided with a CMOS color sensor or monocolor sensor including a first subset of monochrome pixels and a second subset of color pixels. In a picture taking mode, for example, imaging terminal 1000 can capture a single monocolor image or a monocolor video using the monocolor sensor. For an exemplary monocolor sensor pixel array of 864x640, the image size can be 552k and about 16M bytes may be used to store 1 second of video recorded at 30 fps. Embodiments of systems, apparatus, and/or methods to increase image storing accuracy and/or capacity for imaging terminal 1000 will be described herein.

An exemplary pixel array that can be used for monocolor sensor is shown in Table 1. For example, hybrid monochrome and color image sensor pixel array 10 can implement a monocolor sensor according to Table 1. Data from an exemplary pixel array includes color pixel data (*e.g*., RGB) and monochrome pixel data (*e.g*., M). In one embodiment, monochrome pixels M can include over 50% of the pixels in an image sensor. Alternatively, monochrome pixels M can include about 75% of the pixels and color pixels about 25% of the pixels in an image sensor. In one embodiment, color pixels can be less than 10% of the pixels in the image sensor where the remaining pixels are monochrome pixels M. As shown in Table 1, pixels in an exemplary 8x8 block are labeled and include one blue pixel (B1), two green pixels (G1, G2), one red pixel (R1) and 60 monochrome pixels (M2-M4, M6-M32, M34-M36, M38-M64).

**Table 1**

| | | | | | | | | | | | | |
|---|---|---|---|---|---|---|---|---|---|---|---|---|
| B1 | M2 | M3 | M4 | G1 | M6 | M7 | M8 | B2 | M | M | M | G2 |
| M9 | M10 | M11 | M12 | M13 | M14 | M15 | M16 | M | M | M | M | M |
| M17 | M18 | M19 | M20 | M21 | M22 | M23 | M24 | M | M | M | M | M |
| M25 | M26 | M27 | M28 | M29 | M30 | M31 | M32 | M | M | M | M | M |
| G3 | M34 | M35 | M36 | R1 | M38 | M39 | M40 | G4 | M | M | M | R2 |
| M41 | M42 | M43 | M44 | M45 | M46 | M47 | M48 | M | M | M | M | M |
| M49 | M50 | M51 | M52 | M53 | M54 | M55 | M56 | M | M | M | M | M |
| M57 | M58 | M59 | M60 | M61 | M62 | M63 | M64 | M | M | M | M | M |
| B3 | M | M | M | G5 | M | M | M | B4 | M | M | M | G6 |
| M | M | M | M | M | M | M | M | M | M | M | M | M |
| M | M | M | M | M | M | M | M | M | M | M | M | M |
| M | M | M | M | M | M | M | M | M | M | M | M | M |
| G7 | M | M | M | R3 | M | M | M | G8 | M | M | M | R4 |

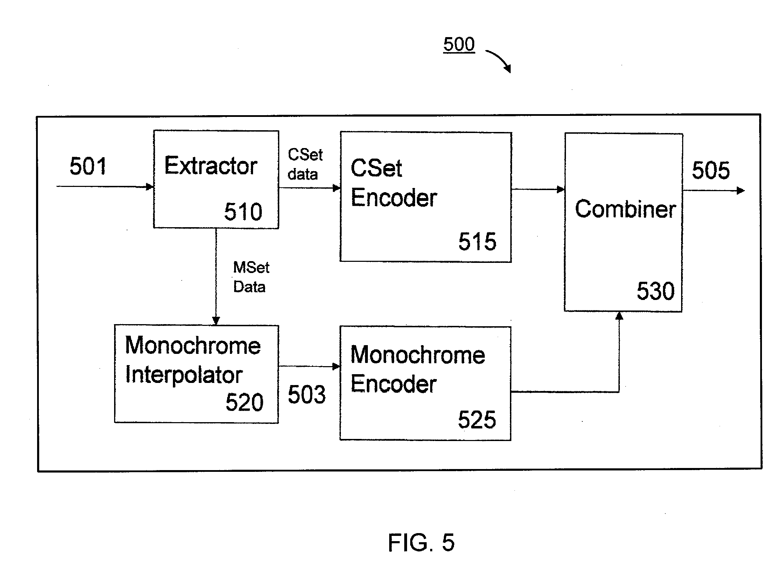

Figure 5 is a diagram illustrating features of an exemplary embodiment of a monocolor image compression module according to the application. Referring to Figure 5, an exemplary monocolor image compression module 500 can include extractor 510, CSet encoder 515, monochrome interpolator 520, monochrome encoder 525, and combiner 530.

Monocolor sensor image data 501 (*e.g*., shown in Table 1) from monocolor sensor (*e.g*., image sensor 8) can be input to extractor 510. An exemplary RGBW color filter array (CFA) can be an 8x8 pixel CFA having a first subset of four color pixels and a second subset of 60 monochrome pixels to generate Table 1 (*e.g*., hybrid monochrome and color image sensor pixel array 10). In extractor 510, color information of a monocolor sensor image can be extracted to form monocolor image color data (*e.g*., CSet dataset) and monochrome information can be extracted to form monocolor image monochrome data (*e.g*., MSet data).

Extractor 510 can extract color data and/or monochrome data from the monocolor sensor image using circuits/methods known to one skilled in the art. For example, monocolor image color data and/or monocolor image monochrome data can be determined or separated based on prescribed pixel locations of color and monochrome pixels, respectively. Alternatively, formatted monocolor sensor image data can include prescribed data (*e.g*., header data) that can be used to identify color pixel data and monochrome pixel data in the received formatted monocolor sensor image data.

Table 2 shows a portion of an exemplary CSet data extracted from Table 1. Table 3 shows a portion of an exemplary MSet data extracted from Table 1.

**Table 2**

| | | | |
|---|---|---|---|
| B1 | G1 | B2 | G2 |
| G3 | R1 | G4 | R2 |
| B3 | G5 | B4 | G6 |
| G7 | R3 | G8 | R4 |

**Table 3**

| | | | | | | | |
|---|---|---|---|---|---|---|---|
| | M2 | M3 | M4 | | M6 | M7 | M8 |
| M9 | M10 | M11 | M12 | M13 | M14 | M15 | M16 |
| M17 | M18 | M19 | M20 | M21 | M22 | M23 | M24 |
| M25 | M26 | M27 | M28 | M29 | M30 | M31 | M32 |
| | M34 | M35 | M36 | | M38 | M39 | M40 |
| M41 | M42 | M43 | M44 | M45 | M46 | M47 | M48 |
| M49 | M50 | M51 | M52 | M53 | M54 | M55 | M56 |
| M57 | M58 | M59 | M60 | M61 | M62 | M63 | M64 |

CSet encoder 515 can receive monocolor image color data (*e.g*., CSet data) from extractor 510. CSet encoder 515 can be a sub-encoder circuit to compress the color data (*e.g*., RGB, color data).

CSet encoder 515 can operate to output compressed color data (*e.g*., compressed CSet data). In one embodiment, CSet encoder 515 can use a lossy compression scheme or a lossless compression scheme corresponding to requirements of a specific application or responsive to user selection/input. Lossless data compression schemes make use of data compression that allows the exact original data to be reconstructed from the compressed data. In contrast, lossy data compression schemes do not allow the exact original data to be reconstructed from the compressed data.

In one embodiment, CSet encoder 515 can implement a plurality of lossy compression schemes and a plurality of lossless compression schemes. In one embodiment, the plurality of lossy and/or lossless schemes can be selectable (*e.g.*, based on detectable conditions, present conditions, or user input). For example, some image file formats, such as PNG, use only lossless compression, while others like TIFF and MNG (Multiple-image Network Graphics) may use either lossless compression or lossy compression. JPEG is a lossy image file format. Color quantization can be considered a lossy data compression, however reconstructing a color image from quantized data (first compression) and then re-quantizing that reconstructed image (second compression) generally produces no additional loss of data relative to the initial color quantization (first compression).

Monochrome interpolator 520 can receive monochrome data (*e.g*., MSet data) from extractor 510. Monochrome interpolator 520 can interpolate the received MSet data to form data for a monochrome image (*e.g*., for subsequent compression). For example, monochrome interpolator can determine monochrome pixel data for missing information in Table 3. Interpolation methods/circuits known to one skilled in the art can be used. Thus, missing monochrome pixel data from MSet data can be determined before the monochrome image data is output to the monochrome encoder 525. In one embodiment, monochrome image 503 can be output for display or storage.

Monochrome encoder 525 can be used to compress the data of the interpolated monochrome image. Monochrome encoder 525 can be a sub-encoder circuit to compress the monochrome image. Monochrome encoder 525 can use lossy compression schemes or lossless compression schemes to compress the monochrome image. In one embodiment, data from the monochrome pixels, which contain relatively large numbers of redundant data for most natural images, can be compressed to achieve a high data compression rate.

Combiner 530 can receive the outputs of CSet encoder 515 and monochrome encoder 525 for respective combination into a monocolor compression file (MCF) 505, which can be an output compressed file or final compressed file. Combiner 530 can generate MCF 505 whether monochrome encoder 525 and CSet encoder 515 use the same or different type (*e.g*., lossy or lossless) of compression. Combiner 530 can generate MCF 505 whether monochrome encoder 525 and CSet encoder 515 used the same data compression scheme or different data compression schemes.

MCF 505 can be transmitted from image terminal 1000 (e.g., to spaced apart device 150) or stored in memory 1085 at image terminal 1000. In one embodiment, a size of the MCF 505 can be significantly reduced (*e.g*., 2x, 5x, 10x, 20x, or smaller) from an originally output monocolor sensor image. In one embodiment, the accuracy of a reconstructed image is increased (*e.g*., relative to a compressed file of the image using related art methods). In one embodiment, MCF 505 can include a header, compressed color pixel data then compressed monochrome pixel data. Further, a balance between image compression ratio and/or accuracy of a reconstructed image can be controlled. For example, based on an exemplary fidelity requirement for color resolution, a lossless compression may be chosen for color data, and an overall size of MCF 505 may not be significantly impacted when an actual number of color pixels are small or limited in an image sensor pixel array.

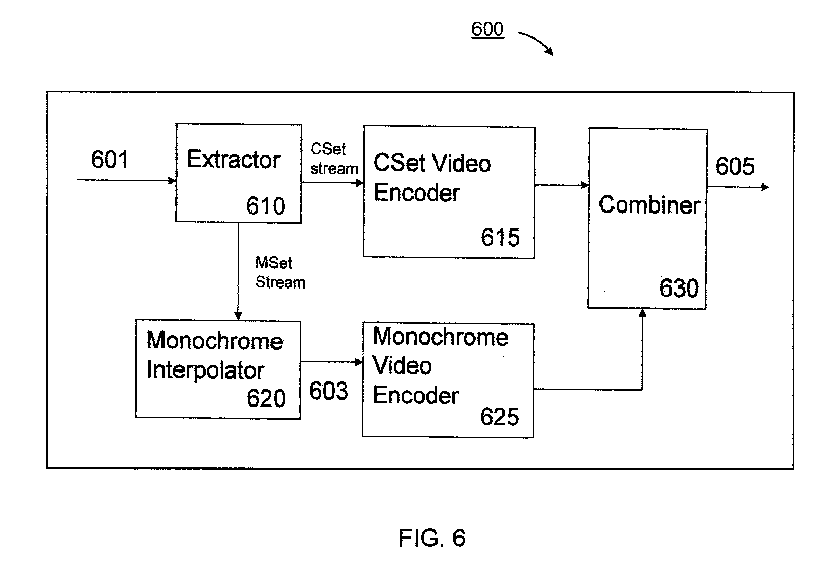

Figure 6 is a diagram illustrating features of an exemplary monocolor stream compression module according to the application. Referring to Figure 6, an embodiment of an exemplary monocolor stream compression module 600 can include extractor 610, CSet video encoder 615, monochrome interpolator 620, monochrome video encoder 625, and combiner 630.

Monocolor sensor stream data 601 from monocolor sensor (*e.g*., image sensor 8) can be input to extractor 560. In one embodiment, monocolor sensor stream data can include monocolor video data or a series of monocolor sensor images. In extractor 610, color information (*e.g*., CSet video data) and monochrome information (*e.g*., monochrome video data) are extracted out of a monocolor sensor stream to output a CSet stream (*e.g*., color data) and monochrome stream (*e.g*., monocolor data), respectively. In one embodiment, CSet data and/or MSet data can be extracted from each frame in a series of frames by extractor 610 to output a CSet stream and/or monochrome stream.

CSet video encoder 615 can be a sub-encoder circuit to compress the CSet stream into representative color video(s). In one embodiment, CSet video encoder 615 outputs a plurality of three separated color videos, respectively. In one embodiment, known video compression schemes may be used in CSet video encoder 615 to output compressed color video data (*e.g*., compressed R videos, compressed G videos, and compressed B videos).

Monochrome interpolator 620 can receive the monochrome video data (*e.g*., monochrome stream) from extractor 610. Monochrome interpolator 620 can interpolate the received monochrome stream data so that missing monochrome video data (*e.g*., missing video data, frame data, and/or pixel data) can be determined before monochrome video 603 is output to the monochrome video encoder 625. In one embodiment, monochrome interpolator 620 can interpolate missing monochrome pixel information extracted by extractor 610 on each frame in a series of frames to output monochrome video 603.

Monochrome video encoder 625 can be used to compress the monochrome video data. Monochrome video encoder 625 can be a sub-encoder circuit to compress the monochrome video data using known monochrome video compression schemes.

Combiner 630 can receive the outputs of CSet video encoder 615 and monochrome video encoder 625 for respective combination into a motion monocolor compression video (MMC) 605, which can be the output compressed video file. As described above, extractor 510, extractor 610, combiner 530 and combiner 530 can be implemented as application programs, hardware, or customized firmware such as FPGAs.

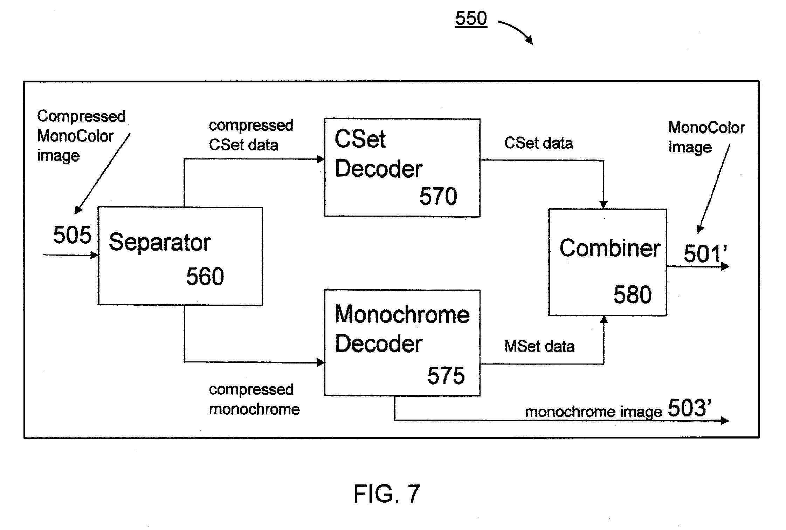

Figure 7 is a diagram illustrating features of an exemplary embodiment of a monocolor sensor image decoder according to the application. Referring to Figure 7, monocolor image decoder module 550 can receive a compressed monocolor image (*e.g*., MCF 505) to separator 560 where compressed CSet image data and compressed monochrome image data are respectively extracted and output. Separator 560 can implement a complementary functionality (*e.g*., a reverse process) to combiner 530.

CSet decoder 570 can be a sub-decoder circuit to extract the CSet data from the compressed CSet data for transmission to combiner 580. Similarly, monochrome decoder 575 can be a sub-decoder circuit to extract the monocolor sensor monochrome data from the compressed monochrome data (e.g., compressed monocolor interpolated frame) for output to combiner 580. Further, monochrome decoder 575 can output (*e.g*., concurrently) a restored monochrome image 503'. Combiner 580 can restore the CSet data and the monochrome data (*e.g*., from the interpolated monochrome image) into a monocolor sensor image 501', which can be output to spaced apart devices 150 stored in memory 1085 of the imaging terminal or displayed on display 3420 of the imaging terminal 1000.

The relationship of monocolor sensor image 501, 501' (and monochrome image 503, 503') will vary based on the compression schemes utilized, however, experimental results show that embodiments can result in accuracy of 501' to be an improvement on known techniques relative to at least characteristics including size of compressed data (representative of an image) and/or quality of reproduced image.

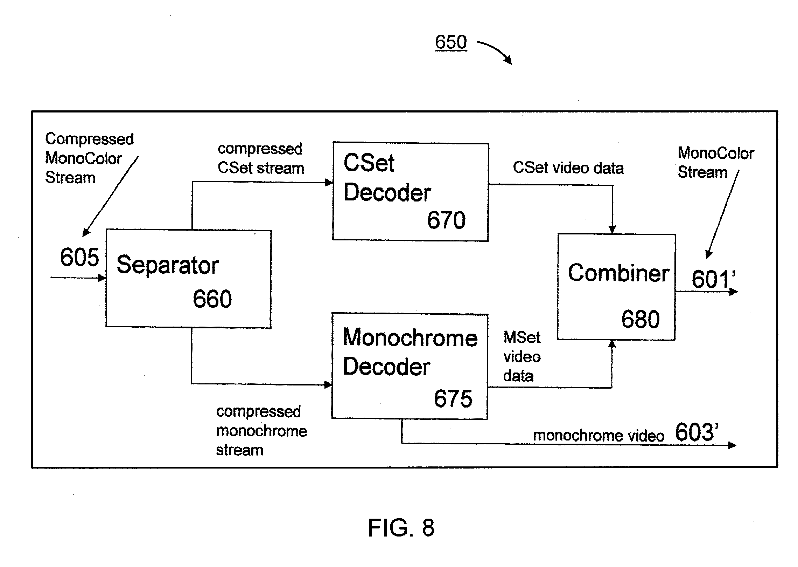

Figure 8 is a diagram illustrating features of an exemplary embodiment of a monocolor stream decoder module according to the application. Referring to Figure 8, monocolor stream decoder module 650 can input a compressed monocolor stream 605 to separator 660 where compressed CSet stream and compressed monochrome stream are respectively extracted and output. CSet video decoder 670 can be a sub-decoder circuit to extract the CSet video from the compressed CSet stream for output to combiner 680. Similarly, monochrome video decoder 675 can be a sub-decoder circuit to extract the monochrome video from the compressed monochrome stream for output to combiner 680. Further, monochrome video decoder 575 can output (*e.g*., concurrently) a restored monochrome video 603'. Combiner 680 can restore the CSet video and the restored monochrome video into a monocolor sensor stream 601', which can be output to spaced apart devices 150, stored in memory 1085 of the imaging terminal or displayed on display 3420 of the imaging terminal 1000.

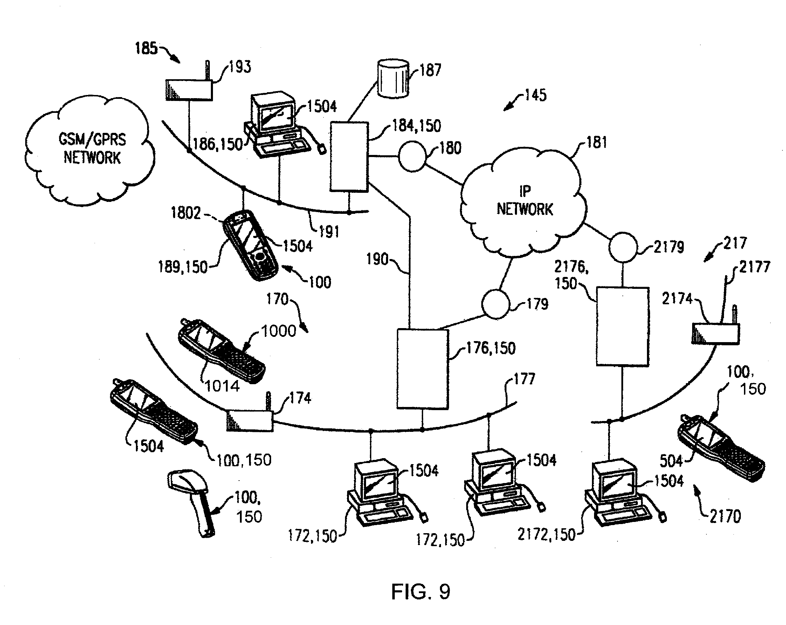

Examples of spaced apart devices 150 that may be in communication with imaging terminal 1000 are shown and described in connection with FIG. 9. Imaging terminal 1000 may be part of a system 145 and may be included in a local area network (LAN) 170 which comprises, in addition to imaging terminal 1000, such spaced apart devices as other portable readers 100, network access point 174, personal computers 172 and central server 176 that are spaced apart from hand held housing 1014 of imaging terminal 1000, all of which can be connected together via backbone 177. Server 176 in turn can be in communication with a variety of additional spaced apart devices 150 that are spaced apart from imaging terminal 1000 and which through server 176 are in communication with imaging terminal 1000. Server 176 may be connected via gateways 179, 180 and network 181 to a first distant remote local area network 185 located miles to thousands of miles away from local area network 170 and a second distant local area network 2170 also located miles to thousands of miles away from local area network. Network 170 may be located at a supplier's warehouse. Network 2170 may be located at a delivery destination; and network 185 may be located at a data processing/data archiving facility. Network 185 can be configured to assemble, store and maintain in server 184 various web pages accessible with use of imaging terminal 1000 that summarize data that has been collected by various optical readers 100. Server 176 may alternatively or redundantly be connected to remote network 185 via private communication line 190. IP network 181 may be the Internet or a virtual private network (VPN). Remote LAN 185 may include a personal computer 186 and a remote server 184 connected via backbone 191. Remote LAN 185 may also include a wireless communication access point 193. Remote LAN 185 may also include a personal data assistant (PDA) 189. Remote LAN 2170 may include a server 2176, connected to IP network 181 via gateway 2179, backbone 2177, access point 2174, PC 2172, and optical reader 100. System 145 may be configured so that a display equipped device, e.g., device 100, 172, 186, 189 can automatically display data, such as decoded out bar code message data or a visual display color image frame of image data, received from imaging terminal 1000 on its associated display 1504 when receiving that data.

Data compression module 1065 can include at least one of monocolor stream decoder module 650, monocolor image decoder module 550, monocolor stream encoder module 600 and/or monocolor image encoder module 500. In one embodiment, data compression module 1065 can be included in imaging terminal 1000 and spaced apart devices 150. Accordingly, imaging terminal 1000 can store compressed monocolor data (*e.g*., MCF, MMC), which can be later transmit to spaced apart device 150. For example, imaging terminal 1000 can transmit the compressed monocolor data periodically or upon receiving a request for the compressed monocolor data. Alternatively, imaging terminal 1000 or optical reader 100 can transmit the uncompressed monocolor sensor data (*e.g*., 501, 601) to spaced apart devices 150 for remote compression using data compression module 1065. Further, stored compressed monocolor sensor data (*e.g*., MCF, MMC) stored on remote spaced apart device 150 can be selectively retrieved and transmitted to a requesting imaging terminal 1000 for display.

In one embodiment, monocolor stream decoder module 650 and monocolor image decoder module 550 can be integrated into a single decoder module and monocolor stream encoder module 600 and monocolor image encoder module 500 can be a single encoder module. In one embodiment, and monocolor stream encoder module 600 and monocolor stream decoder module 650 can be implemented as a single monocolor stream data module and monocolor image decoder module 550 and monocolor image encoder module 500 can be implemented as a single module.

Experimental results

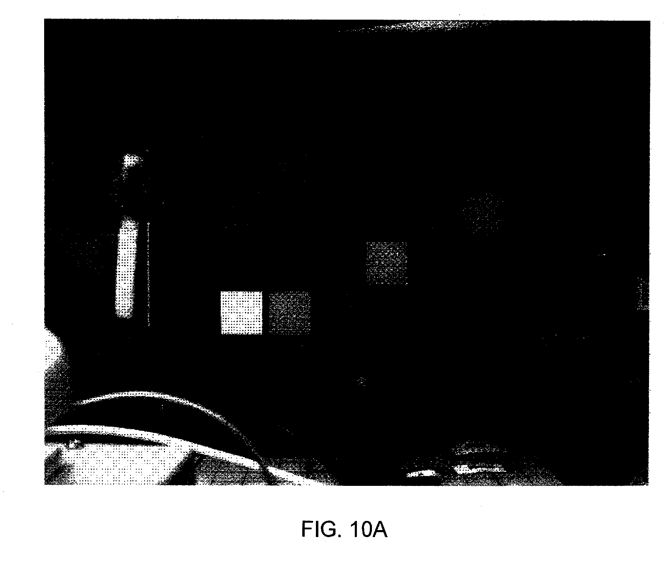

Experimental results will now be described. In an experiment, a test color image TEST1 shown in FIG. 10A was equivalently rendered to a monocolor test image (.bmp). TEST1 had an original color image size over 1.6M bytes.

To evaluate an impact of monochrome compression on an image quality of the reconstructed color images and to evaluate compression performance, exemplary lossless compression (*i.e*., 7-zip/PNG/TIFF) and exemplary lossy compression scheme (JPEG) were respectively used as a monochrome sub-encoder (*e.g*., monochrome encoder 525). To evaluate an impact of CSet compression on an image quality of the reconstructed color images and to evaluate compression performance, exemplary lossless compression (i.e., 7-zip/PNG/TIFF) and exemplary lossy compression scheme (JPEG) were respectively used as a CSet sub-encoder (*e.g*., CSet encoder 520). The lossy CSet encoder such as JPEG can exploit 2D redundancy of natural images and therefore can achieve a better compression efficiency than the lossless CSet encoder such as 7-Zip, PNG and TIFF. Performance results, in terms of compression ratio, color semantic error (CSE) and visual image quality, for the TEST1 image will now be described.

The experimental results show embodiments of monocolor image compression system according to the application can compress monocolor images using either lossless or lossy encoders to achieve a higher compression ratio than directly compressing color images. Embodiments of monocolor image compression were able to achieve data compression ratios between 2.5 and 30.8. Embodiments of a monocolor image compression system using exemplary lossless compression had a compression ratio of 5.5, which was significantly higher than a 2.5 lossless compression ratio for a color image.

Color Semantic Error (E_{c}) is one characteristic measurement designed to measure the performance of a color fusion algorithm on a single color reconstruction. A Color Checker image contains 24 color patches, which can be used to compare the rendered colors (generated by Color Fusion algorithm) with the original colors and calculate the accumulated color interpolation error. The value of CSE (E_{c}) reflects the deviation degree of the reconstructed colors from the original colors. A value of 0 E_{c} indicates the reconstructed colors match the original colors printed in Color Checker images. Experimental results for embodiments of a monocolor image compression system included E_{c} values between 170-178, which were similar to color image compression E_{c} values between 172-176.

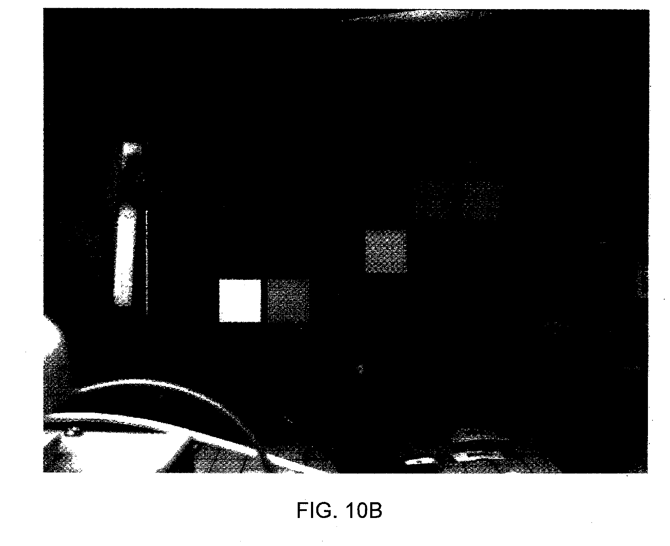

Experimental results of a compression ratio of lossy CSet encoder increased by 133% from 2.23 to 5.2, compared to the lossless CSet encoder. As visually evaluated and indicated by color error measurement (CSE), the image quality of the reconstructed color images based on the lossless and lossy CSet encoders was satisfactory and for experimental examples were visually sufficiently close to a reconstructed color image using the original monocolor image without any compression. An exemplary re-constructed color image according to an embodiment of the application is shown in FIG. 10B.

Although embodiments were described using three color values, namely red, green and blue for monocolor sensor color pixel data, other color values can be used. For example, color values such as cyan, magenta and yellow for monocolor sensor color pixel data can be used.

In a monocolor sensor output data, color pixels and monochrome pixels are both represented. Accordingly, monocolor sensor image and/or video data includes different characteristics and properties of the filmed object. Embodiments of the application can operate to address color and monochrome datasets of the monocolor sensor differently to utilize respective properties of the two datasets (*e.g*., characteristic redundancy) to increase accuracy, compression and/or quality of subsequently re-created monocolor images and/or videos.

Embodiments of the application can recover monocolor images. Embodiments of the application can recover monochrome images. Embodiments of the application can process monocolor data. Embodiments of the application can reduce storage space while preserving structural and color information of the original images or video streams.

According to embodiments of the application, imaging terminal data (*e.g*., monocolor images, video from security cameras) can be significantly reduced before storage. Further, a quality of the reconstructed images/videos from the stored images/videos can be acceptably maintained.

According to embodiments of the application, a subset of the monocolor image color data (*e.g*., CSet data) can be used for searching image databases to improve searching and/or recognition. In one embodiment, CSet data, which is significantly downsized from the original image, can be used as index images in object searching and target recognition to improve performance by dramatically reducing an amount of data (*e.g*., less than 1/10) that needs to be processed by search techniques. In one embodiment, a search for an image can include receiving a set of features corresponding to image characteristics based on CSet data that then are compared to features indexed for multiple stored images (*e.g*., in a database), and search results can be produced based on such comparisons.

An output of exemplary monocolor sensors such as hybrid monochrome and color image sensor pixel array 10 can be either a single raw monocolor image or uncompressed monocolor stream (*e.g*., sequential raw monocolor images, video). In one embodiment, an output of monocolor sensor can be formatted image data or formatted video data. Alternatively, monocolor image data or monocolor stream data can be subsequently formatted after output.

A small sample of systems methods and apparatus that are described herein is as follows:

An indicia reading terminal comprising an image sensor having a hybrid monochrome and color image sensor pixel array, the hybrid monochrome and color image sensor pixel array having a first subset of monochrome pixels and a second subset of color pixels; a lens assembly for use in focusing an image onto the image sensor pixel array; and a hand held housing, wherein the hybrid monochrome pixel array is disposed within the hand held housing; wherein the terminal is operative in an indicia decode mode in which the terminal, in response to an operator initiated command, captures a frame of image data and processes the frame of image data for attempting to decode a decodable indicia representation; wherein the terminal is operative in a picture taking mode in which the terminal, in response to an operator initiated command, captures at least one frame of monocolor image data and compresses the at least one frame of monocolor image data for output of a color frame of image data; wherein said at least one frame of monocolor image data is separated into at least one interpolated monochrome frame of data and color data of the at least one frame of monocolor image data before separate compression.

An indicia reading terminal comprising an image sensor including an image sensor pixel array with a first subset of monochrome pixels and a second subset of color pixels; a lens assembly for use in focusing an image onto the image sensor pixel array; and a hand held housing, wherein the image sensor pixel array is disposed within the hand held housing; wherein the terminal is operative in a picture taking mode in which the terminal, in response to an operator initiated command, captures monocolor image data and processes said at least one frame of image data for output of a color frame of image data; an image data compression module to compress the captured image data, wherein said image data compression module comprises, a separator circuit to separate the image data into monochrome image data representative of said first subset of pixels and color image data representative of the second subset of pixels, a monochrome interpolation circuit to generate an interpolated set of monochrome image data representative of all pixels of the image sensor pixel array, a monochrome image data encoder to encode the interpolated set of monochrome image data, a color image data encoder to encode the color image data representative, and a combiner to receive an output of the monochrome image data encoder and an output of the color image data encoder to output a compressed image file for at least one frame of image data from the image sensor pixel array.

A method of processing data from a monocolor image sensor, the monocolor image sensor including a first subset of monochrome pixels and a second subset of color pixels, comprising receiving at least one frame of monocolor image data from the monocolor image sensor; and compressing said at least one frame of monocolor image data, wherein said compressing the at least one frame of monocolor image data comprises, dividing said at least one frame of monocolor image data into monocolor image color data and monocolor image monochrome data; interpolating the divided monocolor image monochrome data into a frame of monochrome image data; first compressing the monocolor image color data; second compressing the interpolated frame of monochrome image data; and generating a single compressed file from the compressed monocolor image color data and the compressed interpolated monochrome data.

While the present application has been described with reference to a number of specific embodiments, it will be understood that the true spirit and scope of the application should be determined only with respect to claims that can be supported by the present specification. Further, while in numerous cases herein wherein systems and apparatuses and methods are described as having a certain number of elements it will be understood that such systems, apparatuses and methods can be practiced with fewer than the mentioned certain number of elements. Also, while a number of particular embodiments have been set forth, it will be understood that features and aspects that have been described with reference to each particular embodiment can be used with each remaining particularly set forth embodiment.

## Claims

1. An indicia reading terminal comprising:
an image sensor having a hybrid monochrome and color image sensor pixel array, the hybrid monochrome and color image sensor pixel array having a first subset of monochrome pixels and a second subset of color pixels;
a lens assembly for use in focusing an image onto the image sensor pixel array; and
a hand held housing, wherein the image sensor pixel array is disposed within the hand held housing;
wherein the terminal is operative in an indicia decode mode in which the terminal, in response to an operator initiated command, captures a frame of image data and processes the frame of image data for attempting to decode a decodable indicia representation;
wherein the terminal is operative in a picture taking mode in which the terminal, in response to an operator initiated command, captures at least one frame of monocolor image data and compresses said at least one frame of monocolor image data for output of color image data;
wherein said at least one frame of monocolor image data is separated into at least one interpolated monochrome frame of data of said at least one frame of monocolor image data and color data of said at least one frame of monocolor image data before separate compression thereof.

2. The indicia reading terminal of claim 1, wherein a first data compression compresses said at least one interpolated monochrome frame of data and a second data compression compresses the color data of said at least one frame of monocolor image data, wherein the first compression and the second compression are performed concurrently.

3. The indicia reading terminal of claim 2, wherein an output of the first data compression and the second data compression are combined into a monocolor image compressed file.

4. The indicia reading terminal of claim 2, wherein the first data compression is configured to use a first type of lossy compression scheme or a first type of lossless compression scheme, wherein the second data compression is configured to use a second type of lossy compression scheme or a second type of lossless compression scheme.

5. The indicia reading terminal of claim 1, wherein the at least one frame of monocolor image data is compressed before being stored in a memory of the indicia reading terminal or compressed before being transmitted from the indicia reading terminal for remote display or remote storage.

6. The indicia reading terminal of claim 1, wherein the first subset of pixels include monochrome pixels devoid of color filter elements and a second subset of pixels include a color sensitive subset of pixels including color filter elements, wherein the first subset of pixels includes ¹⁵/₁₆ of the hybrid monochrome and color image sensor pixel array.

7. The indicia reading terminal of claim 1, wherein said at least one frame of image data is a succession of frames received at 30 fps or 60 fps, a single raw frame of monocolor image data, a single formatted frame of monocolor image data, a plurality of raw frames of monocolor image data, a plurality of frames of formatted monocolor image data, or a video of monocolor image data.

8. An indicia reading terminal comprising:
an image sensor including an image sensor pixel array with a first subset of monochrome pixels and a second subset of color pixels;
a lens assembly for use in focusing an image onto the image sensor pixel array;
a hand held housing, wherein the image sensor pixel array is disposed within the hand held housing;
wherein the terminal is operative in a picture taking mode in which the terminal, in response to an operator initiated command, captures image data and processes said at least one frame of image data for output of a color frame of image data;
an image data compression module to compress the captured image data, wherein said image data compression module comprises,
a separator circuit to separate the image data into monochrome image data representative of said first subset of pixels and color image data representative of the second subset of pixels,
a monochrome interpolation circuit to generate an interpolated set of monochrome image data representative of all pixels of the image sensor pixel array,
a monochrome image data encoder to encode the interpolated set of monochrome image data,
a color image data encoder to encode the color image data, and
a combiner to receive an output of the monochrome image data encoder and an output of the color image data encoder to output a compressed image file for at least one frame of image data from the image sensor pixel array.

9. The indicia reading terminal of claim 8, wherein the monochrome image data encoder to use a first type of lossy compression scheme or a first type of lossless compression scheme, wherein the color image data encoder to use a second type of lossy compression scheme or a second type of lossless compression scheme.

10. The indicia reading terminal of claim 8, wherein the image data is compressed by the image data compression module before being stored in a memory of the indicia reading terminal or transmitted from the indicia reading terminal for remote display or remote storage, wherein the image data is displayed at a display of the indicia reading terminal without said compression by the image data compression module.

11. The indicia reading terminal of claim 8, wherein the terminal is operative in an indicia decode mode in which the terminal, in response to an operator initiated command, captures a frame of image data and processes the frame of image data for attempting to decode a decodable indicia representation.

12. A method of processing data from a monocolor image sensor, the monocolor image sensor including a first subset of monochrome pixels and a second subset of color pixels, comprising:
receiving at least one frame of monocolor image data from the monocolor image sensor; and
compressing said at least one frame of monocolor image data, wherein said compressing the at least one frame of monocolor image data comprises,
dividing said at least one frame of monocolor image data into monocolor image color data and monocolor image monochrome data;
interpolating the divided monocolor image monochrome data into a frame of monochrome image data;
first compressing the monocolor image color data;
second compressing the interpolated frame of monochrome image data; and generating a single compressed file from the compressed monocolor image color data and the compressed interpolated monochrome data.

13. The method of claim 12, wherein the first compressing uses a first type of lossy compression scheme or a first type of lossless compression scheme, wherein the second compressing uses a second type of lossy compression scheme or a second type of lossless compression scheme, wherein the first type of lossy compression scheme and the second type of lossy compression scheme are different, and wherein the first type of lossless compression scheme and the second type of lossless compression scheme are different.

14. The method of claim 16, comprising:
storing the single compressed file;
retrieving the stored single compressed file;
separating the retrieved single compressed file into the compressed monocolor image color data and the compressed interpolated monochrome data;
first decoding the compressed monocolor image color data;
second decoding the compressed interpolated monochrome data into a decoded monochrome frame of image data;
outputting the decoded monochrome frame of image data;
combining the decoded monochrome frame of image data and the decoded monocolor color data to a reconstructed monocolor image frame; and
displaying the reconstructed monocolor image frame at a display.

15. The method of claim 14, further comprising searching a database of image data using recognition or comparison values based on the monocolor image color data.
